Europäisches Patentamt

European Patent Office

Office européen des brevets

(11) Veröffentlichungsnummer: **0 017 840**
. **A2**

(12) **EUROPÄISCHE PATENTANMELDUNG**

(21) Anmeldenummer: **80101726.0**

(22) Anmeldetag: **01.04.80**

(51) Int. Cl.³: **F 25 B 29/00**, F 25 B 5/00,
F 24 D 11/02

(30) Priorität: **20.04.79 DE 2915955**

(43) Veröffentlichungstag der Anmeldung: **29.10.80**
**Patentblatt 80/22**

(84) - Benannte Vertragsstaaten: **AT BE CH FR LI**

(71) Anmelder: **Licentia Patent-Verwaltungs-GmbH,
Theodor-Stern-Kai 1, D-6000 Frankfurt/Main 70 (DE)**

(72) Erfinder: **Duras, Herbert, Arminstrasse 14,
D-4650 Gelsenkirchen (DE)**
Erfinder: **Hahn, Manfred, Treuchtlinger Strasse 1,
D-8500 Nürnberg (DE)**

(74) Vertreter: **Vogl, Leo, Dipl.-Ing. et al, Licentia
Patent-Verwaltungs-G.m.b.H. Theodor-Stern-Kai 1,
D-6000 Frankfurt 70 (DE)**

(54) Heiz- und Kühleinrichtung.

(57) Die Erfindung betrifft eine Heiz- und Kühleinrichtung
mit einer Wärmepumpe, die einen einem zu kühlenden
Raum zugeordneten Kühlraumverdampfer (5) und einen einem Warmwasserkessel (7) zugeordneten Verflüssiger (3)
im Kältemittelkreislauf aufweist. Um dabei zu erreichen,
dass eine Wärmerückgewinnung aus weiteren Abwärmequellen ohne Nachteil auf die Kühlwirkung im zu kühlenden Raum möglich wird, ist in den Kältemittelkreislauf über
eine Ventilanordnung (11, 12) wahlweise ein Zusatzverdampfer (6) schaltbar, der mit einem Abwasserbehälter
(15) in Wärmeaustausch steht. Dabei sorgt eine Steuerschaltung für die funktionsgerechte Steuerung der Wärmepumpenanlage.

L i c e n t i a

Patent-Verwaltungs-GmbH

Frankfurt/Main

Heiz- und Kühleinrichtung

Die Erfindung betrifft eine Heiz- und Kühleinrichtung gemäß dem Oberbegriff des ersten Anspruchs.

Bei einer bekannten Heiz- und Kühleinrichtung dieser Art (DE-OS 25 30 994) weist die Wärmepumpe einen Kühlraumverdampfer auf, der dem Innenraum eines Kühlschrankes Wärme entzieht. Nachdem jedoch das Wärmeangebot aus dem Kühlschrank relativ begrenzt ist, kann mit dieser Anordnung auch nur eine entsprechend geringe Wärmeenergie dem Warmwasserkessel zugeführt werden.

Der Erfindung liegt die Aufgabe zugrunde, bei einer Heiz- und Kühleinrichtung gemäß dem Oberbegriff des ersten Anspruchs Maßnahmen zu treffen, durch die eine Wärmerückgewinnung aus weiteren Abwärmequellen möglich ist, ohne die Kühlwirkung für den zu kühlenden Raum zu beeinträchtigen.

Die Lösung dieser Aufgabe erfolgt gemäß der Erfindung durch die kennzeichnenden Merkmale des ersten Anspruchs.

Bei dieser Ausgestaltung kann immer dann, wenn dem zu kühlenden Raum genügend Energie entzogen ist, der Zusatzverdampfer an den Kältekreislauf angeschaltet werden, so daß dann dem in einem Abwasserbehälter angesammelten Abwasser zusätzlich Wärmeenergie entzogen werden kann. Dadurch wird auch eine erhöhte Ausnutzung der Wärmepumpe erreicht und die Einschalthäufigkeit des Kompressors vermindert.

Gemäß einer vorteilhaften Ausgestaltung werden die Verdampfer über die dafür vorgesehene Ventilanordnung wechselweise in den Kältemittelkreislauf eingeschaltet, so daß keine gegenseitige Beeinflussung durch unterschiedliche Verdampfungstemperaturen des Kältemittels eintreten und insbesondere definierte Kühlverhältnisse im zu kühlenden Raum gewährleistet werden. Dabei wird die Ventilanordnung vorzugsweise aus zwei elektrisch steuerbaren Magnetventilen gebildet, die in Abhängigkeit von den Temperaturen der die Verdampfer umgebenden Medien gesteuert sind. Zweckmäßig ist es dabei auch, parallel zum Kompressor die Serienschaltung aus einem weiteren Kontakt des Kesselthermostats und einem Gebläsemotor zu schalten, so daß der weitere Kontakt oberhalb einer Solltemperatur einen Gebläsemotor in Gang setzt, der einen den Warmwasserkessel kühlenden Luftstrom erzeugt. Dadurch wird sichergestellt, daß in den Warmwasserkessel jederzeit die aus dem zu kühlenden Raum abzuführende Wärme an das Warmwasser abgegeben werden kann.

Weitere vorteilhafte Ausgestaltungen sind weiteren Ansprüchen zu entnehmen.

Die Erfindung ist nachfolgend anhand der Zeichnungen eines

0017840

Ausführungsbeispiels näher erläutert. Es zeigen

Figur 1 eine schematische Anordnung einer Wärmepumpe in Verbindung mit einem Kühlschrank, einem Abwasserbehälter und einen Warmwasserkessel und

Figur 2 eine elektrische Schaltung zur Steuerung der Verflüssiger der Wärmepumpe.

Über Kältemittelleitungen 1 ist in den Kältemittelkreislauf einer Wärmepumpe ein Kompressor 2, ein Verflüssiger 3 ein Entspannungsventil 4 und die Parallelschaltung eines Kühlraumverdampfers 5 sowie eines Zusatzverdampfers 6 geschaltet. Der Verflüssiger 3 ist dabei vorzugsweise im unteren Bereich eines Warmwasserkessels 7 angeordnet, dem von unten durch einen Zulauf 8 Kaltwasser zugeführt wird und an dessen Oberseite das erwärmte Wasser durch eine Ablaufleitung 9 entnommen werden kann. Ein dem Warmwasserkessel 7 zugeordneter Kesselthermostat 10 erfaßt die Wassertemperatur im Bereich des Verflüssigers 3. In Serie mit dem Kühlraumverdampfer 5 und dem Zusatzverdampfer 6 liegt jeweils ein den Zustrom von Kältemittel steuerndes Magnetventil 11 bzw. 12, die im Ruhezustand geschlossen sind. Der Kühlraumverdampfer 5 ist dabei in einem Kühlschrank 13 angeordnet, dessen Innentemperatur durch einen Kühlthermostat 14 erfaßt wird. Der Zusatzverdampfer 6 befindet sich im Bereich des oberen Niveaus eines Abwasserkessels 15, dem im Bereich des oberen Niveaus ein die Temperatur des Abwassers erfassender Behälterthermostat 16 zugeordnet ist. Im Abwasserbehälter 15 befindet sich ein U-Rohr, dessen einer offener Schenkel nahe dem Boden des Abwasserbehälters angeordnet ist und dessen Bogen das obere Niveau des Abwasserspiegels bestimmt. Das U-Rohr 17 ist dabei oberhalb des oberen Niveaus 18 belüftet. Hierdurch wird sichergestellt, daß zufließendes Abwasser zuerst das unten angesammelte abgekühlte Abwasser aus dem Abwasserbehälter verdrängt.

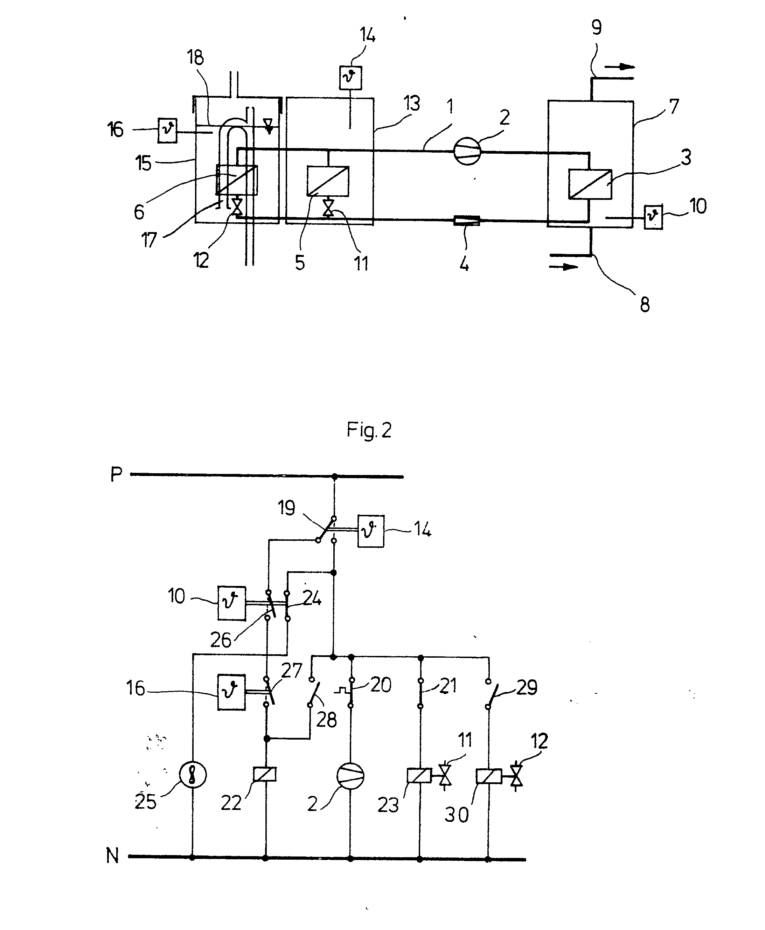

Zur Steuerung der Magnetventile 11 bzw. 12 ist gemäß Figur 2 eine Schaltung in dem Schaltzustand dargestellt, wenn der Kühlschrank 13 keine Kühlenergie benötigt, die verfügbare Wärme aus dem Abwasserbehälter 15 entzogen ist und der Warmwasserkessel 7 auch im Bereich des Verflüssigers 3 die gewünschte maximale Solltemperatur erreicht hat.

Wird bei diesem Zustand der Heiz- und Kühleinrichtung durch den Thermostat 14 Kühlleistung angefordert, dann wird der Umschaltkontakt 19 in die gestrichelte Lage umgestellt und damit über einen Schutz- und Anlaßschalter 20 der Antriebsmotor des Kompressors 2 sowie über einen Ruhekontakt eines Relais 22 die Schaltspule 23 des Magnetventils 11 an Spannung gelegt. Gleichzeitig wird über einen geschlossenen zweiten Kontakt 24 des Kesselthermostats 10 der Antriebsmotor eines Motorgebläses 25 eingeschaltet. Der vom Motorgebläse 25 erzeugte Luftstrom kühlt den Warmwasserkessel 7 in seinem unteren Bereich, so daß die vom Kühlraumverdampfer 5 aufgenommene Wärme wieder an das Wasser im Warmwasserkessel abgegeben werden kann. Nach der Erzeugung einer ausreichenden Kältemenge schaltet der Kühlthermostat 14 zurück in die dargestellte Lage und unterbricht den Stromkreis für den Kompressor 2, die Schaltspule 23 und das Motorgebläse 25.

Wenn während der Zeiten, in welchen der Kühlschrank 13 keine Kälteenergie anfordert, sowohl im Warmwasserkessel 7 vom Thermostat 10 eine Temperatur erfaßt wird, die unterhalb eines festgelegten Sollwertes liegt und auch am Behälterthermostat 16 eine Temperatur oberhalb eines bestimmten Sollwertes ansteht, dann ist sowohl der Kontakt 26 des Kesselthermostats 10 als auch der Kontakt 27 des Behälterthermostats 16 geschlossen, so daß dann die Spule des Relais 22 erregt ist und die Relaiskontakte 28 und 29

0017840

- 5 -

schließen und der Relaiskontakt 21 öffnet. Dann ist auch der zweite Kontakt 24 des Kesselthermostats 10 offen. In diesem Fall liegt der Kompressor 2 über die Kontakte 19, 26, 27, 28 und 20 an Spannung, ebenso die Schaltspule 30 des Magnetventils 12. Das Magnetventil 11 ist dann geschlossen und das Magnetventil 12 geöffnet sowie der Kompressor 2 eingeschaltet, so daß dann dem Wasser aus dem Abwasserbehälter 15 Wärme entzogen und dem Warmwasserkessel 7 zugeführt werden kann. Diese Schaltstellung wird so lange aufrechterhalten, bis entweder der Kühlthermostat 14 Kälteenergie anfordert oder der Kesselthermostat 10 seine Solltemperatur erreicht bzw. am Behälterthermostat 16 die eingestellte Solltemperatur unterschritten ist.

Durch die Serienschaltung der Kontakte 26 des Kesselthermostats 10 und des Kontaktes 27 des Behälterthermostats 16 wird verhindert, daß Wärme aus dem Abwasser in den Warmwasserkessel 7 gepumpt wird, die dann über das Motorgebläse 25 abgeführt werden müßte.

Patentansprüche

1. Heiz- und Kühleinrichtung mit einer Wärmepumpe, die einen einem zu kühlenden Raum zugeordneten Kühlraumverdampfer und einen einem Warmwasserkessel zugeordneten Verflüssiger im Kältemittelkreislauf aufweist, dadurch gekennzeichnet, daß in den Kältemittelkreislauf über eine Ventilanordnung (11,12) wahlweise ein Zusatzverdampfer (6) schaltbar ist, der mit einem Abwasserbehälter (15) in Wärmeaustausch steht.

2. Heiz- und Kühleinrichtung nach Anspruch 1, dadurch gekennzeichnet, daß über die Ventilanordnung (11, 12) wechselweise einer der Verdampfer (5 bzw. 6) in den Kältemittelkreislauf einschaltbar ist.

3. Heiz- und Kühleinrichtung nach Anspruch 1 oder 2, dadurch gekennzeichnet, daß die Ventilanordnung aus zwei elektrisch steuerbaren Magnetventilen (11,12) besteht, die in Abhängigkeit von den Temperaturen der die Verdampfer umgebenden Medien gesteuert sind.

4. Heiz- und Kühleinrichtung nach Anspruch 3, dadurch gekennzeichnet, daß dem zu kühlenden Raum (13) ein Kühlthermostat (14) mit einem Umschaltkontakt (19) zugeordnet ist, der mit einer Kontaktstrecke bei einer Solltemperatur den Antriebsstromkreis eines in den Kältemittelkreislauf eingeschalteten Kompressors (2) schließt sowie das dem Kühlraumverdampfer (5) zugeordnete Magnetventil (11) in Öffnungsstellung bringt und der oberhalb der Solltemperatur über die zweite Kontaktstrecke und einen Kontakt (27) eines dem Abwasserbehälter (15) zugeordneten Behälterthermostats (16) den Antriebsstromkreis des Kompressors (2) und des zweiten Magnetventils (12) vorbereitet.

5. Heiz-und Kühleinrichtung nach Anspruch 4, dadurch gekennzeichnet, daß in Serie mit dem Kontakt (27) des Behälterthermostats (16) ein Kontakt (26) eines dem Warmwasserkessels (7) zugeordneten Kesselthermostats (10) geschaltet ist und daß der Kontakt (26) oberhalb einer Solltemperatur geöffnet ist.

6. Heiz- und Kühleinrichtung nach Anspruch 4 oder 5, dadurch gekennzeichnet, daß parallel zum Kompressor (2) die Serienschaltung aus einem weiteren Kontakt (24) des Kesselthermostats (10) und einem Gebläsemotor (25) geschaltet ist, daß der weitere Kontakt (24) oberhalb einer Solltemperatur geschlossen ist und daß der Gebläsemotor (2) einen den Warmwasserkessel (7) kühlenden Luftstrom erzeugt.

7. Heiz- und Kühleinrichtung nach Anspruch 4 oder einem der folgenden, dadurch gekennzeichnet, daß der Kontakt (27) des Behälterthermostats (16) oberhalb einer Solltemperatur geschlossen ist und eine Spule eines Relais (22) schaltet, von dem ein erster Arbeitskontakt (28) zwischen den Kontakt (27) und den Kompressor (2) geschaltet, ein zweiter Arbeitskontakt (29) in Serie mit dem dem Zusatzverdampfer (6) zugeordneten Magnetventil (12) parallel zum Kompressor (2) und ein Ruhekontakt (21) in Serie mit dem dem Kühlraumverdampfer (5) zugeordneten Magnetventil (11) parallel zum Kompressor (2) geschaltet ist.

0017840

Fig.1

Fig.2

EBHZ-78/100